# EUROPEAN PATENT APPLICATION

(11) **EP 0 720 338 A2**
(43) Date of publication of application: **03.07.1996**
(21) Application number: 95309207.9
(22) Date of filing: 18.12.1995
(51) Int. Cl.: H04M 1/00, H04M 1/72, G06F 1/16, G06F 3/16

(54) **Telephone-computer terminal portable unit**

(30) Priority: 22.12.1994 JP 319851/94
(71) Applicant: International Business Machines Corporation, Armonk, N.Y. 10504 (US)
(72) Inventor: Ehara, Keiichi, Fujisawa-shi, Kanagawa-ken (JP)
(74) Representative: Moss, Robert Douglas

(57) **Abstract**

A portable terminal device, which has a wireless telephone function, comprises a switching means, for choosing either a terminal mode or a telephone mode; a host computer communication means, for exchanging data with a host computer by means of the wireless telephone function; a speech recognition input means, for permitting data to be input orally; and a synthesized sound output means. With this arrangement, the same operational function that is available with a portable telephone can be acquired, and extension of the work environment for the portable terminal device is effected by enabling the device to be manipulated with a single hand and by not requiring an operator to observe visually during terminal operation.

## Description

### Field of the Invention

The present invention relates to a portable computer terminal device employing wireless communication with a host computer

### Background of the Invention

In recent years, in concert with the arrival of the advanced information society, various information processing apparatuses have been developed and information communication networks have been established.

The use of portable telephones as special portable information communication devices is rapidly spreading. The portable telephone is a compact, cordless telephone that can maintain radio contact with a remote party for communication via voice, and as the use of such portable telephones has spread, public wireless telephone networks have been provided and expanded as part of the infrastructure of society.

A technique that provides increased convenience and portability for telephones that serve as such information communication devices is disclosed in Japanese Unexamined Patent Publication No. Sho 63-129765 and Hei 3-108852.

Disclosed in Japanese Unexamined Patent Publication No. Sho 63-129765 is a telephone, with a speech recognition function, which comprises a speech recognition unit that inputs and outputs referential speech pattern data to and from a card-shaped storage medium, so that a specified party recognition system with a high recognition rate can be employed for a telephone, such as a public telephone, that is used by many and unspecified persons. Further, Japanese Unexamined Patent Publication No. Hei 3-108852 relates to a speech recognition and confirmation portable telephone that by including a speech recognition input means, which can at the least recognize the values 0 through 9 of speech signals that are input via a microphone, and a speech output means, which can orally output recognized values for confirmation, makes it possible to eliminate dials and push buttons and to thus construct portable telephones more compact and lighter.

Disclosed in Japanese Unexamined Patent Publication No. Hei 3-108852 is a technique whereby the operability of a telephone is improved by using the speech recognition technique. This technique is related to a remote speech controller, which comprises an importance determination unit that determines the importance of an operation command, and based on a determination result signal, selectively outputs a speech command recognition result, to a re-recognition unit or a transmission unit, in order to increase the recognition rate for a speech command and to reduce the number of erroneous operations due to erroneous recognition.

In addition, to satisfy a need for security functions that has arisen concurrently with the development of information communication networks, a technique that is disclosed in Japanese Unexamined Patent Publication No. Hei 5-153416 has been proposed. This technique is related to a facsimile reception device that provides for the reception side the right to designate an incoming communication as confidential. More specifically, when an operator at the reception side determines that the received video information must be handled as secret, he manipulates a select switch on the input unit of the facsimile device at the reception side in order to select a confidential communication mode and to enter an ID number. Then, a controller stores the ID number in an ID number storage unit, and stores the video information received from a transmission side in a memory in order to inhibit the output of the information. The received video information that is stored in the memory is output only when the receiver enters an ID number after the data reception has been completed and the entered ID number corresponds to the stored ID number.

As portable terminal devices, the use of handy terminals and notebooks, and sub-notebook personal computers has been spreading quickly. An operational technique concerning these is disclosed in Japanese Unexamined Patent Publication No. Hei 1-314462, wherein wireless telephone communication means is installed in a handy terminal so that real time communication with a host computer is possible from a remote location.

### Disclosure of the Invention

The prior art has the following shortcomings: Portable telephones have been employed only as a tool for personal communication using a speech signal.

While a notebook or a sub-notebook personal computer can be employed for multiple applications, operating them is not as simple as operating a telephone. After opening the cover, an operator must concentrate fully on the operation of such a personal computer, watcning the screen and using both hands while entering data or commands at the keyboard. The personal computer has not yet attained such ease of use that a service man, for example, can input sales data to a host computer while driving.

According to the present invention, there is provided a portable computer terminal device comprising a wireless communication means, a mode select means for selecting either a terminal mode in which said device functions as a computer terminal, or a telephone mode, in which said device functions as a wireless telephone; and a speech recognition means for recognizing speech input and for outputting recognition data to control said device while in its terminal mode.

Thus, a single portable terminal device cn be used both as a wireless telephone and as a portable terminal device that has a wireless communication function, and can control the oral input. The application range for the portable terminal device can be extended, and since single-hand manipulation is possible as a result of speech being used for input, the working environment can be expanded.

According to another aspect of the present invention, a portable terminal device, which includes an information processing means, for processing information under the control of a CPU based on either a program that is stored in a memory or an input signal, and a wireless communication means, for transmitting and receiving signals by radio, comprises: a speech input unit, for converting speech into electric speech signals and inputting the electric speech signals; a speech output unit for reproducing an original speech from the speech signals and for outputting the original speech; a wireless telephone means, for outputting the speech signals that are received by the wireless communication means from the speech output unit as audio signals, and for transmitting the speech signals that are input from the speech input unit to enable communication with a partner that is designated by an input signal; a host computer communication means, for enabling communication with a host computer by using the wireless communication means to exchange communication data; a mode select means, for selecting either a terminal mode in which the information processing means is employed or a telephone mode in which the wireless telephone means is employed; a key input means, for changing a signal that is generated through key manipulation either to an input signal or to communication data and for outputting the input signal or communication data; a speech recognition input means, for recognizing speech that is input by the speech input unit and for changing speech recognition data that result from speech recognition to input signals or communication data, and for outputting the input signals or the communication data; a speech synthesis output means, for synthesizing the speech signals in consonance with either the communication data or the speech recognition data, and for outputting the synthesized speech signals to the speech output unit to generate synthesized speech; and a display unit, for displaying the communication data, the speech recognition data, or the signal that is input through key manipulation.

According to another aspect of the present invention, when an operator selects a telephone mode, by using the mode select means, and designates a telephone number, by using the key input means or the speech recognition input means, the wireless telephone means accesses a wireless telephone network and calls the telephone of a designated partner. When the local telephone is connected to the telephone of the partner, speech that is input to the speech input unit is transmitted by radio, via the wireless telephone means, to the telephone of the partner. Speech signals that are transmitted from the partner are received by the wireless telephone means and speech for the signals is output by the speech output unit. The terminal device can be employed in the same manner as is a common wireless portable telephone with which speech is used to freely communicate with a partner in a remote area.

When a terminal mode is selected by the mode select means, as the portable terminal device can serve as an independent information processing unit under the control of a CPU, and can use its host computer communication means to enable the exchange of communication data with a host computer, a higher level information network can be used.

Further, when an operator uses speech to give a command to a CPU, for example, the speech recognition input means converts the speech into speech recognition data that constitutes a control language, and transmits the converted data to the CPU. In other words, command control and data input are possible using speech. In addition, the speech recognition data can be output to the speech synthesis output means and the display unit, and whether or not the recognition result is correct can be confirmed. The host computer communication means can also transmit the speech recognition data as communication data to a host computer via a wireless communication network, while the speech synthesis output means can output as synthesized speech the communication data that are transmitted by the host computer. In this manner, speech communication with the host computer by the portable terminal device is possible, and an extremely natural man-machine interface is realized. Therefore, since in contrast with the conventional technique, where an operator uses both hands to manipulate a key pad while watching a display unit, an operator can in this case perform the basic operations while employing only a single hand. Thus, as it is not necessary for the operator to use his dominant hand and his eyes for terminal manipulation, the portable terminal device of the present invention is more useful for field workers. Of course, as the key input means enables the input of communication data and signals by using keys, operability is ensured and operational errors are prevented.

Since the speech input unit, the speech output unit, and the wireless communication means are common use facilities that are employed both in the telephone mode and the terminal mode, the device can be made compactly and its portability can be increased.

According to a preferred embodiment of the present invention, a portable terminal device further comprises a memory card loading unit, into which a memory card can be loaded; and a memory card access unit, for enabling the reading of input information or a program and the writing of output information by accessing a memory card that is loaded into the memory card loading unit.

In this case, when the memory card, on which is written either predetermined input information or a program, is loaded into the memory card loading unit, the memory card access unit reads the input information or the program. The input information is, for example, input signals or communication data. When the information that is read is input signals, the signals are transmitted to the CPU, which in turn performs control functions that are in consonance with the input signals. When the information that is read is communication data, the data are transmitted to a host computer by the host computer communication means. When a program is read, it is stored in the memory of the CPU, and the control functions that the CPU performs are based on the program.

In this manner, not only by the input of data via key manipulation or speech, but also by the loading of the memory card on which determined input operation is packaged, data communication and the input operation of telephone numbers, etc., are possible, and usability is greatly increased. Further, when various programs are read, the terminal device is employed for a variety of applications, and can be used more widely.

The memory card access unit can be designed that it writes, on the memory card, output information, for example, communication data that are transmitted from the host computer or input signals that are output by the speech recognition input means. Therefore, the input operation of the portable terminal device can be customized for personal use.

According to a further preferred embodiment of the present invention, in a portable terminal device, the speech recognition input means recognizes speech by referring to a speech characteristic values that are read from the memory card by the memory card access unit and speech characteristic values of speech that is input, and outputs speech recognition data.

In this case, when the memory card, on which the speech characteristic values are stored, is loaded into the memory card loading unit, the memory card access unit reads the speech characteristic values at predetermined memory locations. When speech is input to the speech input unit, the speech recognition input unit refers to the received characteristic values of the speech that is input and the speech characteristic values that were read, and outputs speech recognition data that are the reference result. Optimization of the speech characteristic values for a specific speaker is not required, and through the performance of a simple operation, i.e., the substitution of one memory card with another, an unspecified number of operators can input their speech while using a single portable terminal device and a high recognition rate can be obtained.

It is further preferred that, when the memory card on which words for which speech can be recognized are stored is loaded into the memory card loading unit, the memory card access unit reads those wcrds, and the speech recognition input means performs speech recognition in consonance with the range of these words and outputs speech recognition data.

Therefore, even when multiple programs with different commands are to be supplied to and employed in a single portable terminal device, the performance of a simple operation, i.e., the replacement of memory cards, enables oral input for every program at a high recognition rate, and broader use of the device becomes possible.

It is further preferred that, when a speech is input to the speech input unit, the speech determination unit employs the individual speech characteristic values that are inherent to an operator to determine whether or not the transmitted speech is the speech of the operator. The speech recognition input means outputs the speech recognition data only when the input speech is determined to be that of the operator.

Thus, there is an increase in the security function, which can reduce the harm that may be done should the portable terminal device be used without the knowledge of the owner of the device.

While the host computer communication means is communicating with the host computer, the received communication data is usually output to the display unit or to the speech synthesis output unit. It is a further preferred feature of the invention that when, among the received communication data or the received input signals, there is a command signal indicating that the received data must be treated as confidential data, the switching of a data signal circuit is performed and the received data are output only to the display unit, not to the speech synthesis output unit.

In this manner, the received data will not be leaked to the surroundings by synthesized sounds, and secrecy can be maintained.

In a further refinement, the received data is transferred to the memory card access unit and written to the memory card, but the data is not output to the speech synthesis output unit.

Then, the received data will not be leaked to the surroundings by synthesized sounds, and secrecy can be maintained.

The speech recognition data that are output by the speech recognition input means are first stored in the data memory. It is preferred that the speech recognition data that is stored in the data memory is output as an input signal only when an instruction for the input of speech recognition data is issued by the input instruction means.

Therefore, to exercise control by means of speech input, an operator first confirms the speech recognition data by using the display unit or the synthesized sounds, and can employ the speech recognition data for the data input. Thus, an operational error can be prevented.

It is further preferred that the portable terminal device further comprises an input selection means for selecting either the key input means or the speech recognition input means as an input means.

When the key input means is selected by the input selection means, all the input control of the portable terminal device is performed by key manipulation. When the speech input means is selected, the input control is performed by oral input.

Thus, an operator can select a desired input means in consonance with the surroundings, and can ensure that the operation will be performed quickly and accurately.

### Brief Description of the Drawings

Fig. 1 is a diagram illustrating the outline of a portable computer terminal device according to one embodiment of the present invention.

Fig. 2 is a block diagram illustrating the arrangement of a portable terminal device according to the same embodiment of the present invention.

Fig. 3 is a flowchart showing a process for a portable terminal device according to the embodiment while it is in the telephone mode.

Fig. 4 is a flowchart showing an independent mode process for a portable terminal device according to the embodiment while it is in the terminal mode.

Fig. 5 is a flowchart showing a communication mode process for a portable terminal device according to the embodiment when it is in the terminal mode.

### Detailed Description of the Invention

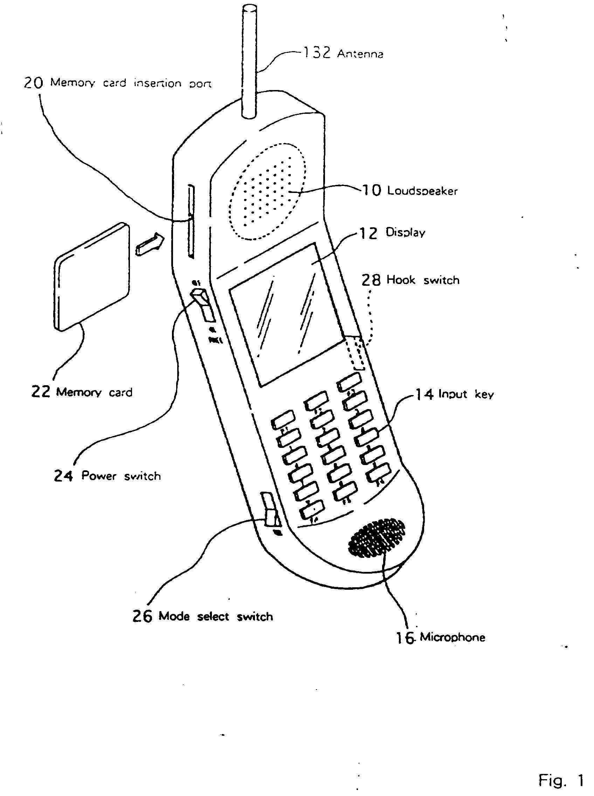

Fig. 1 is a diagram illustrating the outline of a portable terminal device according to the embodiment of the present invention.

As is shown in Fig. 1, the size of a portable terminal device according to the embodiment is almost the same as that of a common portable telephone, and is so portable that it can be held in a single hand. To enable it to be used as a portable telephone, the portable terminal device comprises an antenna 132, for electromagnetic wave pickup and transmission, a loudspeaker 10, which serves as an earpiece, a hook switch 28, input keys 14, which are employed to input a telephone number, a microphone 16, which serves as a mouthpiece, and a power switch 24.

As the portable terminal device of this embodiment is used primarily as an information processing device, it is different from a usual portable telephone. A display 12 is provided on the same face where the loudspeaker 10 and the microphone 16 are located, so that the operator can confirm a large amount of input and output data visually, and so that visibility is ensured. A mode select switch 26, for selecting a telephone mode or a terminal mode, is located on the same side as the power switch 24 in order to enhance single-hand operation and to reduce the erroneous operations that might occur due to the transmission of speech while the face of an operator is close to the portable terminal device. A memory card insertion port 20 is provided, on the side where the mode select switch 26 is located, so that the input and output of data using a memory card 22 is possible.

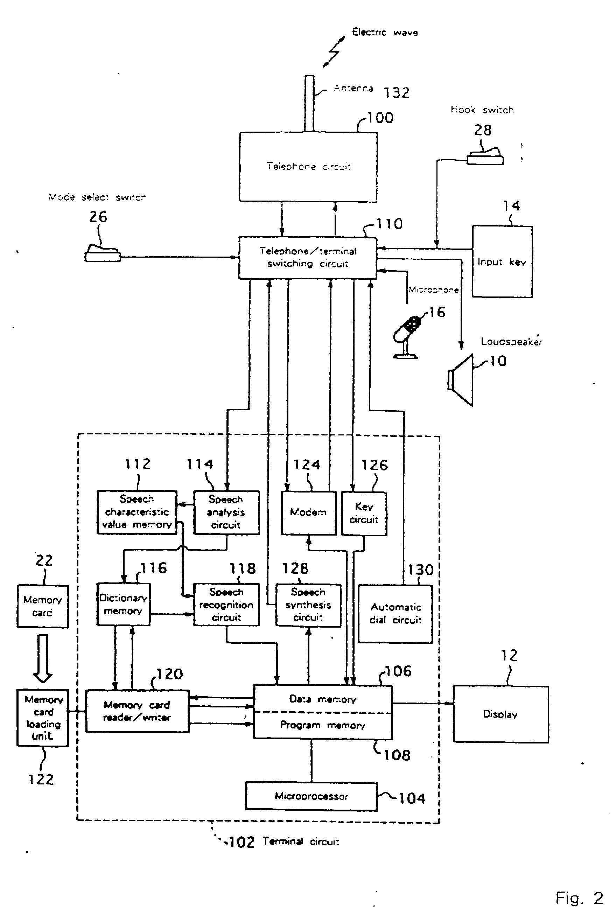

Fig. 2 is a block diagram illustrating the arrangement of the embodiment of the present invention.
In Fig. 2, an electric wave across a wireless telephone network is received at the antenna 132 and the received data are transmitted to a telephone circuit 100, while data that are output by the telephone circuit 100 are converted into an electric wave that is then broadcast across the wireless telephone network. The telephone circuit 100 controls the input and output of communication data that is performed by accessing the wireless telephone network. The communication data are input or output to the telephone circuit 100 via a telephone/terminal switching circuit 110, which is connected to the telephone circuit 100.

The telephone/terminal switching circuit 110 is a type of switching circuit, and is switched between two connection modes by the operation of the mode select switch 26 that is connected to the switching circuit 110. One connection mode is a connection circuit for a telephone mode in which the portable terminal device can be used as a portable telephone, and the other connection mode is a connection circuit for a terminal mode in which the portable terminal device can be employed as a terminal device.

The telephone/terminal switching circuit 110 is connected to the input keys 14, the microphone 16, the loudspeaker 10, and a terminal circuit 102 that is employed mainly for the terminal mode.

The input keys 14 consist of number keys, character keys, symbol keys, and function keys for issuing various commands. Through key manipulation, a key signal that corresponds to a manipulated key is transmitted to the telephone/terminal switching circuit 110. The key signal is employed for the telephone mode to designate a telephone number and for the terminal mode to input a command and data. The input keys 14 are not limited to push buttons, but may be a touch panel or a dial.

The hook switch 28 is provided along the route of the output lines for the input keys 14 to enable the hooking of a telephone number.

The loudspeaker 10 is employed to output as original speech electric speech signals that are transmitted from the telephone/terminal switching circuit 110. The source of the output of speech signals that are sent to the loudspeaker 10 can be changed by the telephone/terminal switching circuit 110. More specifically, in the telephone mode, the telephone/terminal switching circuit 110 is connected to the telephone circuit 100 and speech signals from another telephone user that are received across a wireless telephone network are transmitted to the loudspeaker 10. In the terminal mode, the telephone/terminal switching circuit 110 is connected to a speech synthesis circuit 128 in the terminal circuit 102 and speech signals are transmitted to the loudspeaker 10.

The microphone 16 is employed to convert the original speech of a user into speech signals, which are electric signals, and the speech signals are transmitted to the telephone/terminal switching circuit 110. The output destination of the speech signals that are input via the microphone 16 is changed by the telephone/terminal switching circuit 110. That is, in the telephone mode, the telephone/terminal switching circuit 110 is connected to another telephone circuit 100, and the speech signals are transmitted to another telephone which is in communication via a wireless telephone network. In the terminal mode, the telephone/terminal switching circuit 110 is connected to a speech analysis circuit 114 in the terminal circuit 102 and the speech signals are analyzed.

The terminal circuit 102 is a circuit that makes it possible for the portable terminal device to be used in the terminal mode.

The speech analysis circuit 114 of the terminal circuit 102 performs AD conversion of speech signals that are input via the microphone 16, and acquires speech characteristic values by performing spectrum analysis using the AD data. The speech analysis circuit 114 is connected to a speech characteristic value memory 112 and a dictionary memory 116 so that the output speech characteristic values can be stored.

The speech characteristic value memory 112 is connected to a speech recognition circuit 118 in order that the stored speech characteristic values can be output to the speech recognition circuit 118.

The dictionary memory 116 is connected to the speech recognition circuit 118 to facilitate the output of the stored speech characteristic value in the dictionary to the speech recognition circuit 118. The dictionary memory 116 is also connected to a memory card reader/writer 120, and not only can the stored speech characteristic values be output to the memory card reader/writer 120, but also the speech characteristic values that are transmitted from the memory card reader/writer 120 can be stored. In other words, the input systems for the dictionary memory 116 are those of the speech analysis circuit 114 and of the memory card reader/writer 120. The dictionary memory 116 may include a write inhibited area, so that speech characteristic values for a dictionary may be stored in advance in that area.

The speech recognition circuit 118 compares the speech characteristic values of the input speech, which are transmitted from the speech characteristic memory 112, with the speech characteristic values for a dictionary that are stored in the dictionary memory 116. It then calculates a distance value for each recognizable word, and acquires recognition choices, up to a predetermined rank, whose distance value is small. Predetermined language processing is performed and the final recognition result, the most probable word, is output as speech recognition data. The recognition method is not limited to the above described DP matching, where a distance value is calculated, but may be some other method, such as an HMM that is based on a hidden Markov model.

The memory card reader/writer 120 is connected not only to the dictionary memory 116 but also to the memory card loading unit 122 and a data memory 106. The memory card reader/writer 120 accesses the memory card 22 that is loaded into the memory card loading unit 122, reads the recorded contents, and outputs them to the data memory 106 or to the dictionary memory 116. On the other hand, the memory card reader/writer 120 can write to the memory card 22 data that is transmitted from the data memory 106 or from the dictionary memory 116. The memory card reader/writer 120 is also connected to a program memory 108, reads a program that is recorded on the memory card 22, and outputs the program to the program memory 108.

The data memory 106 is the main memory in which input and output data for the portable terminal device is stored. Not only is the data memory 106 employed to input data from and output data to the memory card reader/writer 120, but as the data memory 106 is also connected to the speech recognition circuit 118, the speech synthesis circuit 128, a modem 124, a key circuit 126, and the display 12, the input and output of data involving these components is possible. In other words, the speech recognition data that are transmitted by the speech recognition circuit 118 are output to the speech synthesis circuit 128 or to the display 12. With the data memory 106, the input and output of communication data with the modem 124 is possible, and signals that are input from the key circuit 126 can be stored.

A microprocessor 104, which controls the portable terminal device in the terminal mode, manages the data input and output process of the data memory 106, and employs a program that is stored in the program memory 108 to control the individual circuits that constitute the portable terminal device.

The speech synthesis circuit 128 holds as data speech characteristic values for phonemes and their combinations. The speech synthesis circuit 128 employs the data to produce speech characteristic values for speech recognition data that are extracted from the data memory 106, and outputs the speech characteristic values as speech synthesis data to the telephone/terminal switching circuit 110. The speech synthesis data is finally transmitted to the loudspeaker 10 and synthesized sounds are produced. The method that is employed for preparing speech synthesis data is not limited to the one that is described above. Some other method may be employed.

The modem 124 is a modulator/demodulator that converts analog signals that are received by the telephone circuit 100 into digital signals, and that converts digital communication data that are stored in the data memory 106 into analog signals and outputs the analog signals to the telephone circuit 100. Therefore, if the portable terminal device in this embodiment is one that is employed with a digital telephone network, it is unnecessary for it to be equipped with the modem 124.

The key circuit 126 converts key signals that are sent from the input keys 14 into input signals for control, and outputs the converted input signals to the data memory 106.

The display 12 is a means for displaying characters, such as numbers and symbols, and image data, such as graphics, and is, for example, a liquid crystal display, a plasma display, or a cathode ray tube. The display 12 is connected to the data memory 106 so that it can display speech recognition data, communication data, and input signals that are stored in the data memory 106.

In the terminal mode, an automatic dial circuit 130 automatically dials a host computer by using a previously known dialing number. After the line is connected, the microprocessor 104 logs in by employing a program that is stored in the program memory 108.

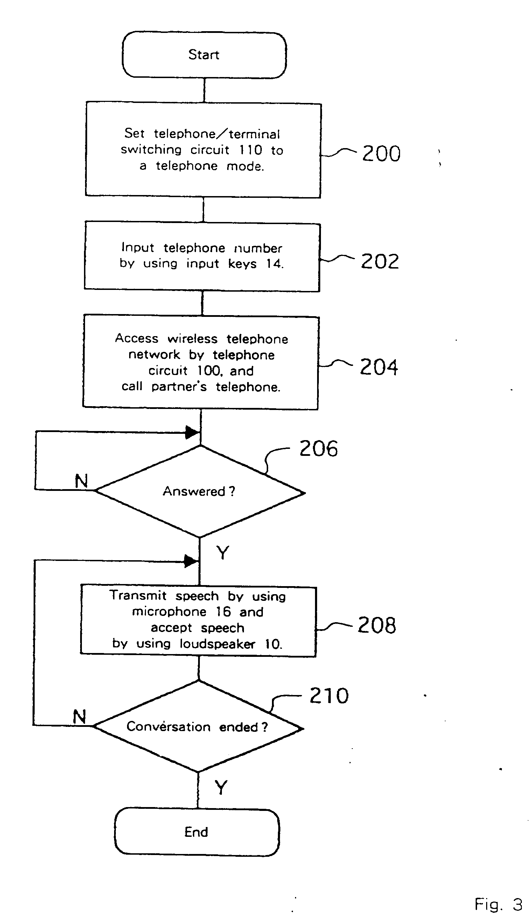

The processing for this embodiment will now be described.
First, the processing when an operator manipulates the mode select switch 26 and selects the telephone mode will be explained while referring to the flowchart in Fig. 3.

In Fig. 3, when a command for changing to the telephone mode is transmitted via the mode select switch 26 to the telephone/terminal switching circuit 110, the telephone/terminal switching circuit 110 is switched to the telephone mode (step 200). When a user inputs a telephone number of a party to be called by using the input keys 14, key signals that correspond to the telephone number are sequentially transmitted from the input keys 14 to the telephone circuit 100 (step 202).

The telephone circuit 100 then accesses a wireless telephone network via the antenna 132, and when the telephone of the called party is found, the telephone circuit 100 is connected by radio to the telephone of the other party and calling begins (step 204). Calling continues until the other party answers (step 206).

When the called party has answered (affirmative decision at step 206), the transmission of speech is begun via the microphone 16. The speech is converted into electric speech signals at the microphone 16, and the speech signals are emitted as electric waves by the antenna 132 and are received by the other party's telephone, so that conversation can be carried on (step 208). Also, speech signals from the other party are received at the antenna 132 and are forwarded via the telephone circuit 100 and output as speech at the loudspeaker 10 (step 208). The procedures at step 208 are repeated until the conversation with the partner is ended (step 210).

As described above, although the portable terminal device in the embodiment is a terminal device, only a single operation involving the mode select switch 26 is required for it to perform in exactly the same manner as does a common wireless portable telephone, and an operator can employ speech to freely communicate with a person in a remote area. The telephone number may be designated by inputting it orally.

The processing in the terminal mode will now be explained. To change to the terminal mode, the mode select switch 26 is manipulated and the telephone/terminal switching circuit 110 is switched to the terminal mode.

The portable terminal device can be used in two ways when the terminal mode is selected: it can be used as an independent information processing terminal (independent mode), and it can be used as a terminal that exchanges communication data with a host computer (communication mode).

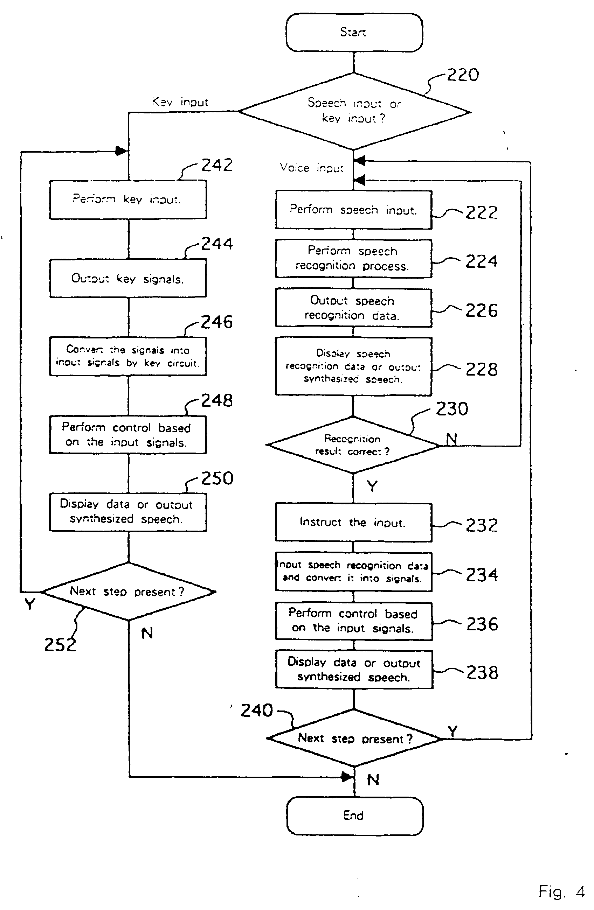

Fig. 4 is a flowchart for the processing performed in the independent mode when the terminal mode is selected.

In Fig. 4, a check is performed to determine whether or not a task for the portable terminal device is to be executed by oral input or by key input (step 220). The microprocessor 104 makes this decision in consonance with the importance of the task and the operational environment. Whether the execution will be performed by oral input or by key input is determined in consonance with the types of tasks and the task environments. For example, a task that requires an exact entry of data is executed by key input, while a task that an operator must observe visually is executed by oral input. An operator may decide by himself which input should be effected and select it by using as needed the function keys among the input keys 14.

When speech is selected as an input means, an operator speaks into the microphone 16, speech signals are derived from the speech as electric signals, and electric signals are sent to the terminal circuit 102 via the telephone/terminal switching circuit 110 (step 222).

The speech analysis circuit 114 and the speech recognition circuit 118 perform speech recognition on the received speech signals (step 224). The speech recognition data that are the result of recognition process are output to the data memory 106 (step 226).

The speech recognition data that have been output to the data memory 106 are transmitted to the display 12 where the results of the recognition process are displayed as alphanumeric characters (step 228). Or, the speech recognition data are transmitted to the speech synthesis circuit 128 and are output as synthesized sounds at the loudspeaker 10 (step 228). Thus, the operator can confirm whether or not the obtained recognition result is correct (step 230), and an erroneous operation that is due to a recognition error can be prevented.

When the recognition result is determined to be correct according to the displayed alphanumeric characters or the synthesized sounds, the input of speech recognition data is instructed (step 232). When the recognition result is determined to be incorrect, however, the oral input is repeated (step 222). The input instruction is issued by using, for example, either the function keys of the input keys 14 or a separately provided switch.

Upon the receipt of the input instruction, the speech recognition data that are stored in the data memory 106 are converted into input signals for control, and the microprocessor 104 employs the input signals to perform its control functions (step 234). From the program memory 108, the microprocessor 104 reads guidance information for performing the task and outputs it either to the display 12 or to the speech synthesis circuit 128, so that the information either is displayed as alphanumeric characters or is output as the synthesized sounds (step 238).

A check is performed to determine whether or not a next step exists for the task (step 240). When the result is affirmative, oral input is performed (step 222) and the task is processed. When the result is negative, the task is terminated.

When key input is selected as the input means, the operator manipulates the keys 14 to input data (step 242) and key signals are output from the input keys 14 to the key circuit 126 (step 244).

The key circuit 126 converts the received key signals into input signals for control (step 246), and the microprocessor 104 performs its control functions in consonance with the input signal (step 248). From the program memory 108, the microprocessor 104 reads guidance information for performing the task and outputs it either to the display 12 or to the speech synthesis circuit 128, so that the information is either displayed as alphanumeric characters or is output as the synthesized sounds (step 250).

Then, a check is performed to determine whether or not a next step exists for the task (step 252). When the result is affirmative, key input (step 242) is performed and the task is performed. When the result is negative, the task is terminated.

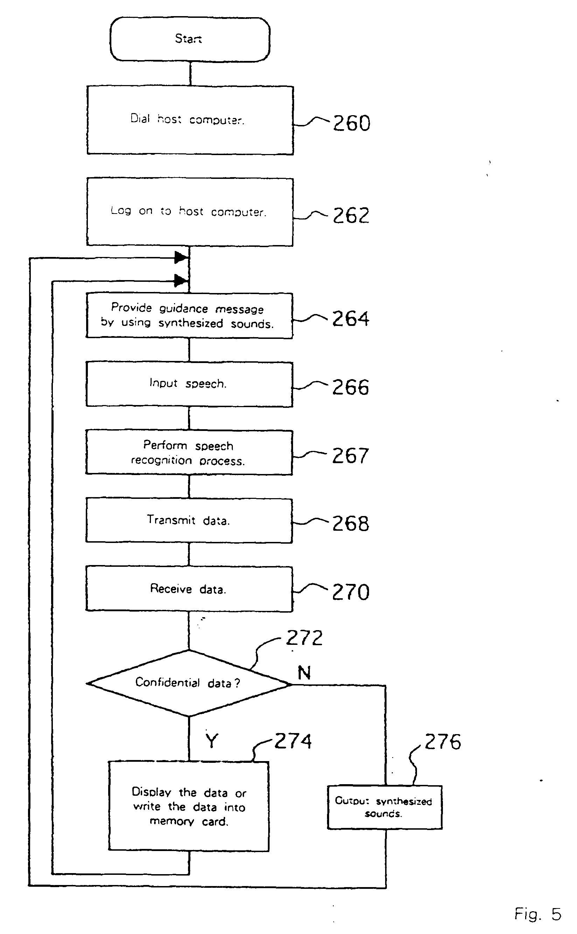

The description given above is for the processing that is performed in the independent mode.
The processing that is performed for the present invention in the communication mode when the terminal mode has been selected will now be explained while referring to the flowchart in Fig. 5.

In Fig. 5, the hook switch 28 is turned on, and the automatic dial circuit 130 is employed to dial in to a host computer at a previously known dialing number (step 260). Then, the telephone circuit 100 accesses the wireless telephone network to connect the line to the host computer.

When the line is connected to the host computer, the microprocessor 104 logs on to the host computer by executing a log-on program that is stored in the program memory 108 (step 262). Predetermined data, such as a password, are input by using the input keys 14.

When the session with the host computer has been established, this is transmitted to the operator such a manner that the microprocessor 104 drives the speech synthesis circuit 128 by using a program in the program memory 108 and synthesized sounds for guidance messages are output through the loudspeaker 10 (step 264). A guidance message of, for example, "Application XXXX is now ready. Start task." is output using synthesized sounds.

The operator orally inputs previously determined commands and data by using the microphone 16 (step 266). Then, speech signals are transmitted to the speech analysis circuit 114 and the speech recognition circuit 118, where a speech recognition process is performed (step 267). Speech recognition data that are codings of the recognition results are transmitted to the data memory 106.

Following the programmed procedures, the microprocessor 104 converts the speech recognition data, which has been transferred to the data memory 106, into analog signals by using the modem 124, and transfers the analog signals via the telephone/terminal switching circuit 110 to the telephone circuit 100. The telephone circuit 100 transmits the speech recognition data as electric waves from the antenna 132 across the wireless telephone network (step 268).

For the reception of data from the host computer, the procedures described above are inverted and command data are transferred from the telephone circuit 100, via the telephone/terminal switching circuit 110 and the modem 124, to the data memory 106 (step 270).
The microprocessor 104 refers to a flag that is written in the header of the received data, and determines whether or not the received data is confidential (step 272). This decision may be made by the operator, who may then transmit to the microprocessor 104 the fact that the received data should be treated as confidential.

When the received data are determined to not be confidential data, by following predetermined procedures, the microprocessor 104 drives the speech synthesis circuit 128 and the loudspeaker 10 to output the received data using synthesized speech. When the received data is determined to be confidential data, however, either the microprocessor 104 outputs the data only to the display 12 or the memory card reader/writer 120 is driven to write the received data on the memory card 22 that is loaded into the memory card loading portion 122. In this manner, the possibility of confidential data being leaked to people in the vicinity is reduced, and secrecy of data can be kept.

In this manner, communication with the host computer has been executed in accordance with a predetermined program.

The portable terminal device according to the embodiment of the present invention has been explained above. When a memory card is also used for speech recognition input, broader use of the device is possible. More specifically, the memory card 22 on which the speech characteristic values of an operator are stored in advance is prepared, read and stored in the dictionary memory 116 by the memory card reader/writer 120. Then, based on the dictionary data that is optimized for an individual, computation for reference can be performed by the speech recognition circuit 118. Therefore, the optimization of the speech characteristic values for a specific speaker is not required, and a simple operation, i.e., the replacement of memory cards, makes it possible for an unspecified number of persons to orally input data to the same portable terminal device at a high recognition rate.

Recognizable words that are stored on the memory card, and that are inherent to the individual programs, are read by the memory card reader/writer 120. Speech recognition is then performed by the speech recognition circuit 118 for the range of recognizable words in a program that is currently being executed, thus making possible a high recognition rate of oral input for every program and enabling broader use of the device.

There is one method for increasing the security function of the portable terminal device. As the function of the speech analysis circuit 114, not only is a speech spectrum calculated, but personal speech characteristic values that represent the characteristics of the speech of an operator are also extracted. Then, a speech determination means that is provided employs the characteristic values to determine whether or not speech has been input by a specific operator. The device may be so designed that oral input is performed only when the speech determination means decides that the input speech is similar to the self speech characteristic values that are stored in an internal memory, or on a memory card, and is therefore the speech of that individual. In this manner, erroneous operation due to the input of the speech of a third person can be prevented. As the self speech characteristic values, the results obtained by AD conversion of high frequency components, etc., of a glottal sound source can be employed. The high frequency components that are contained in the speech of a person represents the characteristics of the individual, and those characteristics are stable.

As is described above, according to the present invention, since the portable terminal device provides two functions, a portable telephone function and an information processing device function that enables wireless communication, and since it employs a speech recognition means and a speech synthesis means for an oral dialogue system, its usability and its utility value as a portable terminal device for a field worker are increased.

## Claims

1. A portable computer terminal device comprising a wireless communication means (100,132);
a mode select means (26,110) for selecting either a terminal mode, in
which said device functions as a computer terminal, or a telephone mode, in which said device functions as a wireless telephone; and
a speech recognition means (114,118) for recognizing speech input and for outputting recognition data to control said device while in it's terminal mode.

2. A device as claimed in claim 1 further comprising a microphone (16); a speaker (10); a keypad (14) and a data processor (104); whereby, in said terminal mode, the microphone, speaker and keypad function as a telephone and, in said terminal mode, signals from the microphone are connected to said speech recognition means and said recognition data from the speech recognition means is applied to control said data processor.

3. A device as claimed in claim 2 including output means (12,128) for outputting said recognition data to an operator.

4. A device as claimed in claim 3 including user operated means (14) for confirming said recognition data and causing it to be applied to said data processor.

5. A device as claimed in claim 3 or claim 4 in which said output means includes a speech synthesis means (128).

6. A device as claimed in claim 3 or claim 4 in which said output means includes a display (12).

7. A portable terminal device, which includes an information processing means, for processing information under the control of a CPU based on either a program that is stored in a memory or an input signal, and a wireless communication means, for transmitting and receiving signals by radio, comprising:
a speech input unit, for converting speech in said electric speech signals and inputting said electric speech signals;
a speech output unit for reproducing an original speech from said speech signals and for outputting said original speech;
a wireless telephone means, for outputting said signals that are received by said wireless communication means from said speech output unit as audio signals, and for transmitting said speech signals that are input from said speech input unit to enable communication with a partner that is designated by an input signal;
a host computer communication means, for enabling communication with a host computer by using said wireless communication means to exchange communication data;
a mode select means, for selecting either a terminal mode in which said information processing means is employed or a telephone mode in which said wireless telephone means is employed;
a key input means, for changing a signal that is generated through key manipulation either to an input signal or to communication data and for outputting said input signal or communication data;
a speech recognition input means, for recognizing speech that is input by said speech input unit and for changing speech recognition data that result from speech recognition to input signals or communication data, and for outputting said input signals or said communication data;
a speech synthesis output means, for synthesizing said speech signals in consonance with either said communication data or said speech recognition data, and for outputting the synthesized speech signals to said speech output unit to generate synthesized speech; and
a display unit, for displaying said communication data, said speech recognition data, or said signal that is input through key manipulation.

8. A portable terminal device according to claim 7, further comprising: a memory card loading unit, into which a memory card can be loaded; and a memory card access unit, for enabling the reading of input information or a program and the writing of output information by accessing a memory card that is loaded into said memory card loading unit.

9. A portable terminal device according to claim 8, wherein said speech recognition input means recognizes speech by referring to a speech characteristic values that are read from said memory card by said memory card access unit and speech characteristic values of speech that is input, and outputs speech recognition data.

10. A portable terminal device according to claim 8, wherein said speech recognition input means recognizes speech employing a range of words for which speech recognition is possible and that are read from said memory card by said memory card access unit.

11. A portable terminal device according to claim 7 or claim 8, wherein said speech recognition input means consists of a speech determination means, which employs individual speech characteristic values that are inherent to an operator to determine whether or not input speech is the speech of said operator, and a means for outputting said speech recognition data only when said speech determination means determines that said input speech is said speech of said operator.

12. A portable terminal device according to claim 7 or claim 8, wherein, upon the receipt of an instruction that said received data is to be treated as confidential data, said host computer communication means outputs said received data only to said display unit, and does not output said received data to said speech synthesis output means.

13. A portable terminal device according to claim 8, wherein, upon the receipt of an instruction that said received data is to be treated as confidential data, said host computer communication means outputs said received data to said memory card access unit for said received data to be written into said memory card, and does not output said received data to said speech synthesis output means.

14. A portable terminal device according to claim 7 or claim 8, wherein said speech recognition input means has data memory that is employed for storing said speech recognition data and an input instruction means for issuing an instruction for the input of speech, and said speech recognition data that is stored in said data memory is output as an input signal only when an input instruction is issued by said input instruction means.

15. A portable terminal device according to claim 7 or claim 8, further comprising an input selection means for selecting either said key input means or said speech recognition input means as an input means.
